Europäisches Patentamt

European Patent Office

Office européen des brevets

(19)

(11) Veröffentlichungsnummer : **0 120 145**
**B1**

# (12) EUROPÄISCHE PATENTSCHRIFT

(45) Veröffentlichungstag der Patentschrift :
30.07.86

(21) Anmeldenummer : 83200400.6

(22) Anmeldetag : 23.03.83

(51) Int. Cl.⁴ : **G 01 F   1/58**

(54) Messwertaufnehmer für magnetisch-induktive Durchflussmessgeräte.

(43) Veröffentlichungstag der Anmeldung :
03.10.84 Patentblatt 84/40

(45) Bekanntmachung des Hinweises auf die Patenterteilung : 30.07.86 Patentblatt 86/31

(84) Benannte Vertragsstaaten :
CH DE FR GB LI NL

(56) Entgegenhaltungen :
WO-A-83 /020 00
DE-A- 2 030 263
DE-A- 2 950 039
GB-A-   899 095
GB-A- 1 156 875
US-A- 3 750 468
US-A- 3 924 466

(73) Patentinhaber : RHEOMETRON AG
Schützenmattstrasse 43
CH-4003 Basel (CH)

(72) Erfinder : Rademacher-Dubbick, Kristian
Waldsteige 14
D-4100 Duisburg 1 (DE)

(74) Vertreter : Ackmann, Günther, Dr.-Ing.
Claubergstrasse 24 Postfach 10 09 22
D-4100 Duisburg 1 (DE)

## Beschreibung

Die Erfindung betrifft einen Meßwertaufnehmer für magnetisch-induktive Durchflußmeßgeräte mit einem keramischen Meßrohr, das in Bohrungen eines — insbesondere aus Stahl bestehenden — Gehäuses befestigt, mit Meßelektroden, deren jeweiliger Schaft radial durch den Mantel des Meßrohres führt und in der Keramikmasse dicht eingesintert ist, sowie mit auf dem Mantel angeordneten Magnetspulen versehen ist.

Bestandteil magnetisch-induktiver Durchflußmeßgeräte ist ein rohrförmiger Meßwertaufnehmer, der zwischen den Anschlußflanschen einer Rohrleitung befestigt wird und durch den eine leitfähige Flüssigkeit quer zur Richtung eines Magnetfeldes strömt. Die der Strömungsgeschwindigkeit proportionale Spannung wird an zwei Meßelektroden abgegriffen und über Stromleiter einem Meßwertumformer zugeführt. In der älteren europäischen Patentanmeldung 81201316.7 (veröffentlicht am 9.6.83 als WO 83/02000) ist ein Meßwertaufnehmer beschrieben, bei dem die Enden eines keramischen Meßrohres durch Schrumpfspannung in Bohrungen eines einteiligen Stahlgehäuses befestigt werden. Die Schrumpfbefestigung sichert das Meßrohr gegen ein Verdrehen und gegen axiale Verschiebung, so daß ein späteres Nachjustieren entfällt. Auch liegt das keramische Meßrohr geschützt innerhalb des Stahlgehäuses und die feste Schrumpfverbindung verhindert sogar einen Bruch des keramischen Werkstoffes, wenn der Meßwertaufnehmer herunterfällt oder auf ihn eine starke Stoß- oder Schlageinwirkung stattfindet. Schließlich dichtet die Schrumpfverbindung das Innere des Stahlgehäuses flüssigkeitsdicht gegen die peripheren Mantelflächen des Meßwertaufnehmers ab. Für einfachere Ausführungen ist es bekannt, den Außendurchmesser der Lagerflächen des keramischen Meßrohres so auszubilden, daß die Enden bei Normaltemperatur in die Bohrungen einsteckbar sind und die Befestigung durch Verkleben bzw. Verkitten der Lagerflächen erfolgt.

Eine solche Schrumpfbefestigung hat sich bei Meßwertaufnehmern mit kleinen Nennweiten bewährt. Bei größeren Nennweiten bereitet jedoch die Anpassung der Paßflächen für den Schrumpfsitz Schwierigkeiten. Ungenauigkeit in den Bohrungen des Stahlgehäuses, vor allem aber an den Paßenden des keramischen Meßrohres können leicht zu Zerstörungen des keramischen Werkstoffes führen. Auch ist der Zusammenbau der schweren Bauteile schwierig.

Zur Beseitigung dieser Schwierigkeiten und für eine geeignete Anwendung der Schrumpfverbindung auch bei Meßwertaufnehmern mit größeren Nennweiten sieht die Erfindung vor, daß bei Meßwertaufnehmern der eingangs genannten Art das Gehäuse aus zwei ringförmigen Gehäuseteilen besteht, die an ihrem nach innen weisenden Ende je einen radial nach außen weisenden Rand haben und durch ein gegen die Ränder anliegendes Rohrstück fest miteinander verbunden sind.

Diese Ausgestaltung hat den Vorteil, daß in Längsrichtung des keramischen Meßrohres keine Biegespannungen auftreten und daher bei der Montage keine Werkstoffzerstörung stattfindet. Außerdem ist der Zusammenbau sehr einfach und kostensparend.

Die Befestigung des Rohrstückes an den Rändern der beiden ringförmigen Gehäuseteile kann verschieden sein. Eine besonders einfache und zweckmäßige Befestigung erfolgt durch Verschweißen des Rohrstücks an diesen Rändern. Für einen genauen Sitz der ringförmigen Gehäuseteile auf den Enden des keramischen Meßrohres können die ringförmigen Gehäuseteile mit einer gegen die Stirnenden des keramischen Meßrohres anliegenden Anschlagschulter versehen sein.

In der Regel werden beide ringförmigen Gehäuseteile durch Schrumpfspannung auf dem betreffenden Ende des keramischen Meßrohres befestigt. Sind jedoch größere Wärmeausdehnungen zu erwarten, beispielsweise wenn der Meßwertaufnehmer von einem heißen Medium durchströmt wird, so kann eines der beiden ringförmigen Gehäuseteile durch Schrumpfspannung auf einem Ende des keramischen Meßrohres befestigt sein, während das andere ringförmige Gehäuseteil unter Zwischenlage eines oder mehrerer, in je einer Ringnut einliegender Dichtungsringe auf dem anderen Ende des keramischen Meßrohres befestigt ist. Hierdurch ist ein Spannungsausgleich erreicht. Für einfachere Ausführungen können die ringförmigen Gehäuseteile auch auf den Enden des keramischen Meßrohres mittels einer Klebe- oder Kittmasse befestigt sein.

Zur Erleichterung der Montage des Meßwertaufnehmers in einer Rohrleitung können die ringförmigen Gehäuseteile mit einem um die Rohrachse verdrehbaren Befestigungsflansch versehen sein ; durch einfaches Verdrehen lassen sich die Befestigungsflansche in eine solche Lage bringen, daß ihre Bohrungen für die Befestigungsbolzen fluchtend zu denen der Anschlußflansche der Leitungsrohre liegen.

In der Zeichnung sind zwei Ausführungsbeispiele dargestellt ; es zeigt :

Figur 1 die obere Hälfte eines Meßwertaufnehmers in einem Langsschnitt und

Figur 2 eine weitere Ausführungsform in einer der Fig. 1 entsprechenden Darstellung.

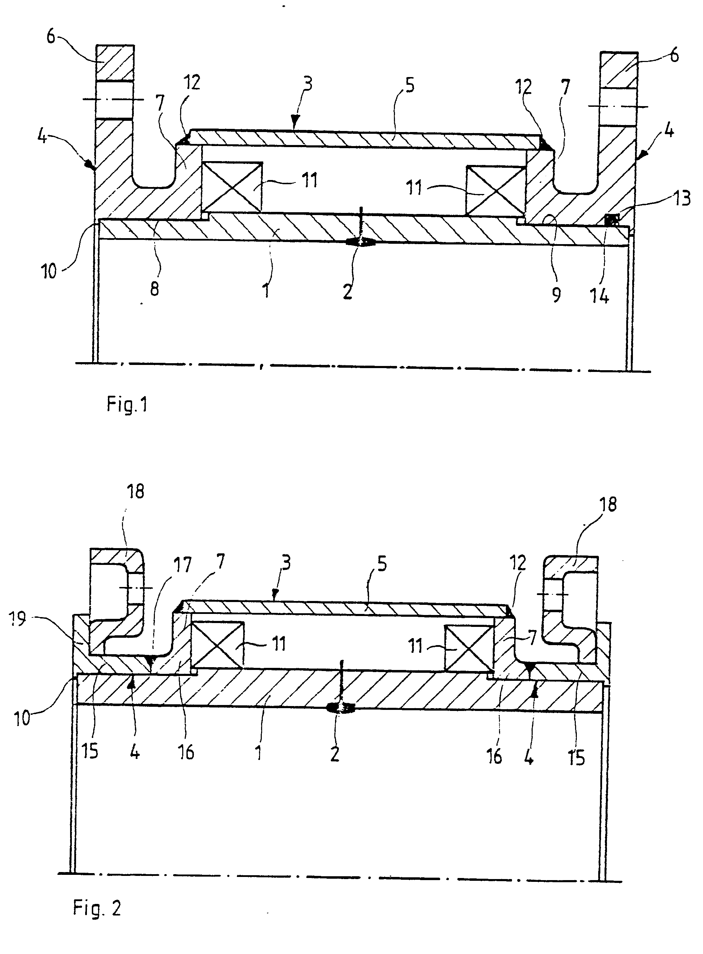

Der in Fig. 1 dargestellte Meßwertaufnehmer besteht im wesentlichen aus einem keramischen Meßrohr 1, welches mit Meßelektroden 2 versehen ist. Es kann aus verschiedenen keramischen Werkstoffen hergestellt sein, zu denen beispielsweise Aluminiumoxid, Oxide des Berylliums, Magnesiums, Zirkons, Thoriums, Oxid-

verbindungen wie Magnesium-Aluminium-Oxid gehören. Geeignet sind aber auch alle anderen keramischen Werkstoffe, die sich durch Sintern zu einem dichten Werkstoff verarbeiten lassen (z. B. Nitrite, Carbide), wobei die radial durch den Mantel des Meßrohres 1 geführten Schäfte der Meßelektroden 2 dicht in der Keramikmasse eingesintert sind.

Das keramische Meßrohr 1 ist in einem Stahlgehäuse 3 angeordnet, welches aus zwei ringförmigen, jeweils mit einem Befestigungsflansch 6 versehenen Gehäuseteilen 4 besteht. Beide ringförmigen Gehäuseteile 4 sind an ihrem nach innen weisenden Ende mit einem radial nach außen weisenden Rand 7 ausgestattet. Bestandteil des Stahlgehäuses 3 ist weiterhin ein Rohrstück 5, das gegen die ringförmigen Gehäuseteile 4 anliegt. Jedes ringförmige Gehäuseteil 4 ist außerdem mit einer gegen die Stirnfläche des keramischen Meßrohres 1 anliegenden Anschlagschulter 10 versehen.

Die Befestigung der ringförmigen Gehäuseteile kann wahlweise durch Schrumpfspannung, mit Hilfe von Dichtungselementen oder durch Verkleben bzw. Verkitten erfolgen. Hierfür werden die Enden des keramischen Meßrohres 1 zuvor auf einen für die Befestigungsart geeigneten Außendurchmesser geschliffen. Auf einen entsprechenden Durchmesser werden die Bohrungen 8 der beispielsweise aus Stahlguß bestehenden ringförmigen Gehäuseteile 4 gedreht.

Für eine Schrumpfspannung sind die geschliffenen Lagerflächen 9 und Bohrungen 8 so aufeinander abgestimmt, daß das erwärmte ringförmige Gehäuseteil 4 auf ein Ende des keramischen Meßrohres 1 aufsteckbar ist und nach dem Aufstecken und Abkühlen mit einer entsprechenden Schrumpfspannung fest und dicht an der Lagerfläche 9 anliegt. Beim Zusammenbau wird zunächst auf ein Ende des keramischen Meßrohres 1 ein ringförmiges Gehäuseteil 4 durch Schrumpfspannung befestigt. Nachdem die Magnetspulen 11 fixiert sind, wird das Rohrstück 5 über den Rand 7 geschoben. An dem noch freien Ende wird nunmehr ein weiteres ringförmiges Gehäuseteil 4 aufgesteckt. Dies kann wahlweise durch Aufschrumpfen geschehen (in der Zeichnung nicht dargestellt), oder es besteht die Möglichkeit, das ringförmige Gehäuseteil 4 unter Zwischenlage eines oder mehrerer in je einer Ringnut 13 einliegender Dichtungsringe 14 auf dem betreffenden Ende des keramischen Meßrohres 1 zu befestigen (vgl. rechtes Ende in Fig. 1). Anschließend wird in beiden Fällen das Rohrstück 5 so verschoben, daß es mit seinem Ende auf dem zugehörigen Rand 7 der ringförmigen Gehäuseteile 4 aufliegt und dort verschweißt werden kann. Die beiden Schweißnähte sind mit 12 bezeichnet. Ist eine einfache Befestigung durch Verkleben oder Verkitten vorgesehen, geschieht die Montage in ähnlicher Weise.

Bei der in Fig. 2 dargestellten Ausführungsform sind die beiden ringförmigen Gehäuseteile 4 mit einem um die Rohrachse verdrehbaren Befestigungsflansch 18 versehen. Hierfür sind die Gehäuseteile 4 in einen Außenring 15 und einen Innenring 16 unterteilt. Der vorgefertigte Befestigungsflansch 18 wird auf den mit einem Kragen 19 versehenen Außenring 15 aufgesteckt, ehe beide Ringteile miteinander verschweißt werden (vgl. Schweißnaht 17). Die Bohrungen des Außenrings 15 und Innenrings 16 können einen gleichen oder einen unterschiedlichen Durchmesser erhalten, wobei entweder beide oder einer durch Schrumpfspannung befestigt sein kann. Ähnlich ist eine Befestigung mittels Dichtungsringen oder durch Verkleben möglich.

Beim Einbau des Meßwertaufnehmers in eine Rohrleitung wird an den Stirnenden des keramischen Meßrohres 1 je ein Dichtungsring (nicht dargestellt) angeordnet.

Die neuartige Ausbildung des Gehäuses kann auch bei Ausführungen gleichermaßen Verwendung finden, wo anstelle von Stahl ein anderer Werkstoff, beispielsweise ein Leichtmetall, Kunststoff o. dgl. verwendet wird.

**Patentansprüche**

1. Meßwertaufnehmer für magnetisch-induktive Durchflußmeßgeräte, bestehend aus einem keramischen Meßrohr (1), welches in Bohrungen (8) eines — insbesondere aus Stahl bestehenden Gehäuses (3) befestigt ist, und welches mit Meßelektroden (2), deren jeweiliger Schaft radial durch den Mantel des Meßrohres führt und in der Keramikmasse dicht eingesintert ist, sowie mit auf dem Mantel angeordneten Magnetspulen (11), versehen ist, wobei das Gehäuse (3) aus zwei ringförmigen Gehäuseteilen (4), besteht, die an ihrem nach innen weisenden Ende je einen radial nach außen weisenden Rand (7) haben und durch ein gegen die Ränder (7) anliegendes Rohrstück (5) fest miteinander verbunden sind.

2. Meßwertaufnehmer nach Anspruch 1, dadurch gekennzeichnet, daß das Rohrstück (5) an den Rändern (7) verschweißt ist.

3. Meßwertaufnehmer nach Anspruch 1 oder 2, dadurch gekennzeichnet, daß die ringförmigen Gehäuseteile (4) mit einer gegen die Stirnfläche des keramischen Meßrohres (1) anliegenden Anschlagschulter (10) versehen sind.

4. Meßwertaufnehmer nach einem der Ansprüche 1 bis 3, dadurch gekennzeichnet, daß beide ringförmigen Gehäuseteile (4) durch Schrumpfspannung auf dem betreffenden Ende des keramischen Meßrohres (1) befestigt sind.

5. Meßwertaufnehmer nach einem der Ansprüche 1 bis 3, dadurch gekennzeichnet, daß eines der beiden ringförmigen Gehäuseteile (4) durch Schrumpfspannung auf einem Ende des keramischen Meßrohres (1) befestigt und das andere ringförmige Gehäuseteil (4) unter Zwischenlage eines oder mehrerer in je einer Ringnut (13) einliegender Dichtungsringe (14) auf dem anderen Ende des keramischen Meßrohres (1) befestigt ist.

6. Meßwertaufnehmer nach einem der Ansprüche 1 bis 3, dadurch gekennzeichnet, daß die ringförmigen Gehäuseteile (4) auf den Enden des keramischen Meßrohres (1) mittels einer Klebe- oder Kittmasse befestigt sind.

7. Meßwertaufnehmer nach einem der Ansprüche 1 bis 6, dadurch gekennzeichnet, daß die ringförmigen Gehäuseteile (4) mit je einem um die Rohrachse verdrehbaren Befestigungsflansch (18) versehen sind.

**Claims**

1. A pickup for magneto-inductive flow meters, comprising a ceramic measuring tube (1) which is secured in bores (8) of a casing (3) made more particularly of steel and which has : measuring electrodes (2), the stem of each such electrode extending radially through the tube envelope and being sintered sealingly in the ceramic mass ; and magnetic windings (11) on the envelope, the casing (3) being embodied by two annular casing parts (4) each having on their inwardly extending ends a radially outwardly extending edge (7) and being rigidly interconnected by a tubular member (5) which engages the edges (7).

2. A pickup according to claim 1, characterised in that the tubular member (5) is welded to the edges (7).

3. A pickup according to claim 1, 2, characterised in that the annular casing parts (4) have an abutment shoulder (10) engaging the end face of a ceramic measuring tube (1).

4. A pickup according to any of claims 1-3, characterised in that the two annular casing parts (4) are shrink-fitted on the particular end concerned of the ceramic measuring tube (1).

5. A pickup according to any of claims 1-3, characterised in that one of the two annular casing parts (4) is shrink-fitted on one end of the ceramic measuring tube (1) and the other annular casing part (4) is secured on the other end of the ceramic measuring tube (1) with the interposition of one or more ring seals (14) each disposed in an annular groove (13).

6. A pickup according to any of claims 1-3, characterised in that the annular casing parts (4) are secured to the ends of the ceramic measuring tube (1) by means of an adhesive or cement composition.

7. A pickup according to any of claims 1-6, characterised in that the annular casing parts (4) each have a securing flange (18) rotatable around the tube axis.

**Revendications**

1. Capteur de valeurs de mesure pour des débitmètres magnéto-inductifs, constitué par un tube de mesure en céramique (1) qui est fixé dans des perçages (8) d'un boîtier (3) formé de préférence avec un acier qui est pourvu d'électrodes de mesure (2) dont les tiges respectives traversent radialement l'enveloppe du tube de mesure et sont maintenues avec étanchéité par frittage dans la masse céramique, ainsi que par des bobines d'électro-aimants (10), le boîtier (3) étant constitué par deux éléments de boîtier de forme annulaire (4) qui présentent chacun, sur le côté dirigé vers l'intérieur, un bord radial (7) dirigé vers l'extérieur et qui sont solidarisés entre eux par une pièce tubulaire (9) portant contre les bords.

2. Capteur de valeurs de mesure selon la revendication 1, caractérisé par le fait que la pièce tubulaire (5) est soudée au bord (7).

3. Capteur de valeurs de mesure selon la revendication 1 ou 2, caractérisé par le fait que les éléments de boîtier (4) de forme annulaire sont pourvus d'un épaulement de butée (10) qui porte contre la surface frontale du tube de mesure en céramique (1).

4. Capteur de valeurs de mesure selon l'une des revendications 1 à 3, caractérisé par le fait que les deux éléments de boîtier (4) de forme annulaire, sont fixés par retrait sur l'extrémité correspondante du tube de mesure en céramique (1).

5. Capteur de valeurs de mesure selon l'une des revendications 1 à 3, caractérisé par le fait que l'un des éléments de boîtier (4) de forme annulaire, est fixé par retrait sur une extrémité du tube de mesure céramique (1) alors que l'autre élément de boîtier (4) de forme annulaire est fixé sur l'autre extrémité du tube de mesure céramique (1), avec interposition d'un ou de plusieurs anneaux d'étanchéité (14) dont chacun est monté dans une gorge annulaire (13).

6. Capteur de valeurs de mesure selon l'une des revendications 1 à 3, caractérisé par le fait que les éléments de boîtier (4) de forme annulaire, sont fixés, sur les extrémités du tube de mesure en céramique (1), à l'aide d'une masse adhésive ou d'un mastic.

7. Capteur de valeurs de mesure selon l'une des revendications 1 à 6, caractérisé par le fait que les éléments de boîtier (4) de forme annulaire sont chacun pourvus d'un flasque de fixation (18) susceptible de tourner autour de l'axe du tube.

Fig.1

Fig. 2

1